Europäisches Patentamt

European Patent Office

Office européen des brevets

(19)

(11) Publication number: **0 035 036**
A1

## (12) EUROPEAN PATENT APPLICATION

published in accordance with Art. 158(3) EPC

(21) Application number: 80900130.8

(22) Date of filing: 27.12.79

Data of the international application taken as a basis:

(86) International application number: **PCT/JP 79/00328**

(87) International publication number: **WO 80/02337 (30.10.80 80/25)**

(51) Int. Cl.³: **G 06 K 9/20**

(30) Priority: 17.04.79 JP 47491/79
29.10.79 JP 139682/79

(43) Date of publication of application: 09.09.81
**Bulletin 81/36**

(84) Designated Contracting States: **CH DE FR GB**

(71) Applicant: **FUJITA, Ryuhei, 733, Ohaza-nakagawa, Ureshino-cho Ichishi-gun, Mie-ken 515-23 (JP)**

(72) Inventor: **KAWAI, Katsushi, 37-14, Shirabane-cho 1-chome, Mizohu-ku, Nagoya-shi Aichi-ken 467 (JP)**
Inventor: **FUJITA, Ryuhei, 733, Ohaza-nakagawa Ureshino-cho, Ichishi-gun, Mie-ken 515-23 (JP)**

(74) Representative: **von Bezold, Dieter (DE) et al, Maria-Theresia-Strasse 22, D-8000 München 86 (DE)**

(54) **INPUT DEVICE FOR HAND-WRITTEN CHARACTERS AND PATTERNS.**

(57) An input device for hand-written characters and patterns comprising: a light source (2) and an optical fiber (3), both being provided facing the tip of a light pen (4), a trace reader circuit (5) which receives optical signals from the optical fiber through a photo-sensitive element and supplies electrical signals indicating the direction of the trace, and a micro-computer (14) which receives direction data signals from the trace reader circuit, status signals, and condition signals from a condition key switch (25) and processes these signals in accordance with a programmed pattern recognition algorithm so as to form pattern recognition data. This device optically detects information indicative of characters and patterns while they are being written, and converts this information into electric signals so that it can be input into a computer via an on-line system.

0035036

DESCRIPTION

## Technical Field

This invention relates to input means for hand-written characters, figures or the like, more particularly to input means which writes characters and figures by hand, and at the same time detects those as optical information, converts the information into electric signals and then inputs the signals to a computer under on-line system.

## Background Art

An OCR (optical character reader) has been developed as input means for common handwritten characters, and it is of practical use for numerical characters, Japanese "Kana" characters or special characters. On the other hand, an on-line character recognition device using a tablet has been developed for freely handwritten characters.

The OCR, however, can be used only for characters written within a specified frame, and the device in tablet system is expensive and not widely used except for special object.

## Disclosure of Invention

This invention is characterized in an apparatus comprising transmitting and receiving fibers which are arranged towards the tip of a pen, a handwriting reading circuit which inputs optical signals from the receiving fibers to a

0035036

receiving element and outputs electric signals corresponding to the direction of the handwriting, and a microcomputer which receives the direction data from the reading circuit, status signals and condition signals from condition key switches, and generates character recognition data by the operation processing according to the programmed algorithm for character recognition.

An object of this invention is to provide an apparatus which writes characters, figures or the like by hand and at the same time inputs the handwriting information from the characters or the like to a computer under on-line system using a small device.

Another object of this invention is to provide an input means for handwritten charaters, figures or the like, which is not restricted by a specified writing frame as in a conventional OCR system, with a small processing device for signals and highspeed data processing.

A still another object of this invention is to provide an input means for handwritten characters, figures or the like, which can input the character recognition data with respect to a plurality of characters of different sorts to a computer under on-line system.

Accordingly, this invention permits the simultaneous action of writing characters with a pen, generating the character recognition data and inputting the data to a computer under on-line system. Further, this invention is not restricted by a writing frame as in a character reading device of OCR system, simplifies the structure in comparison with a character recognition device of tablet system, and enables to generate the character recognition data universally with respect to a plurality of characters of different sorts and input the data
to a computer.

Above mentioned and other objects and features of
this invention will be apparent from the following description
referring to the accompanying drawings.  However, the drawings
are for explanation only and not for limiting the scope of this
invention.

## Brief Description of the Drawings

The drawings show preferable embodiments of this
invention.

Figure 1 is a sectional view of an input menans for
handwritten characters, figures or the like;

Figure 2 is a bottom view of the input means of
Figure 1;

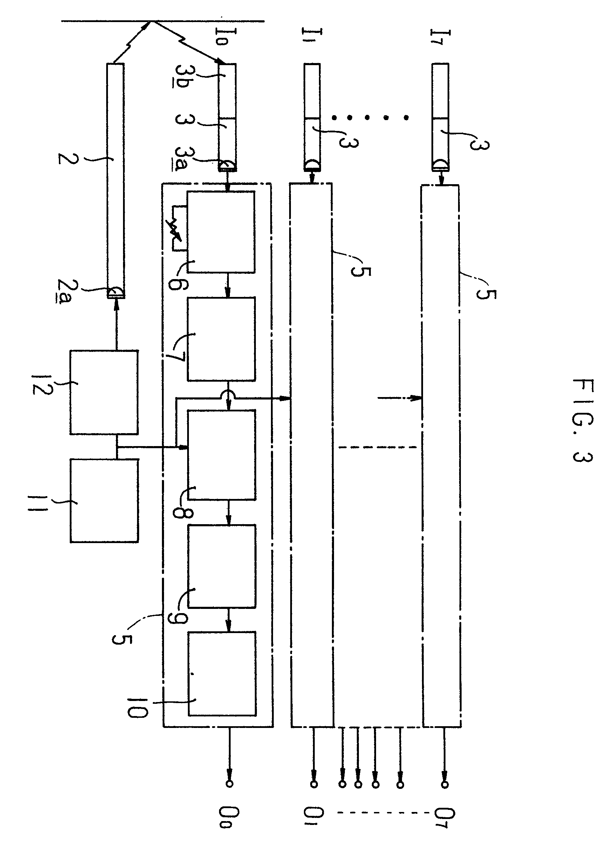

Figure 3 is a block diagram of a handwriting reading circuit of the input means for handwritten characters,
figures or the like;

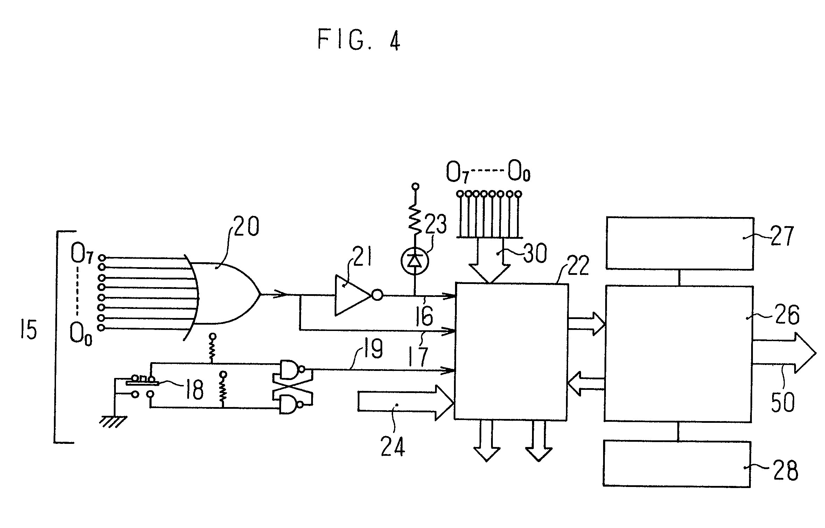

Figure 4 is a block diagram of a microcomputer
including an interface member;

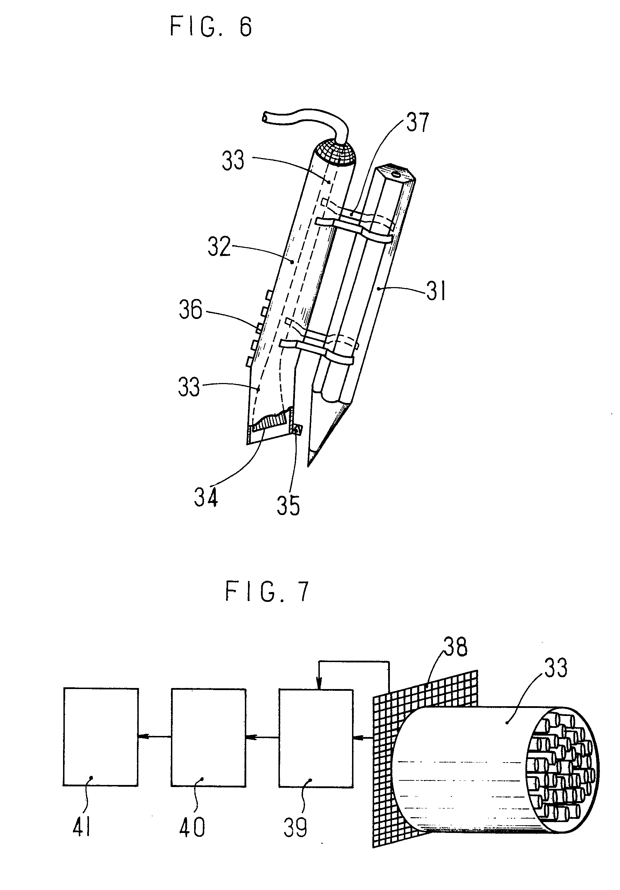

Figure 5 is a diagram illustrating the change of
direction label numbers on light-receiving fibers in each
stroke;

Figure 6 is a perspective view of an input means in
another embodiment; and

Figure 7 is a block diagram of a converting device
of optical information into electric signals used for the input
means in Figure 6.

Best Mode for Carrying Out the Invention

Embodiments of this invention will be explained in detail now referring to the accompanying drawings.

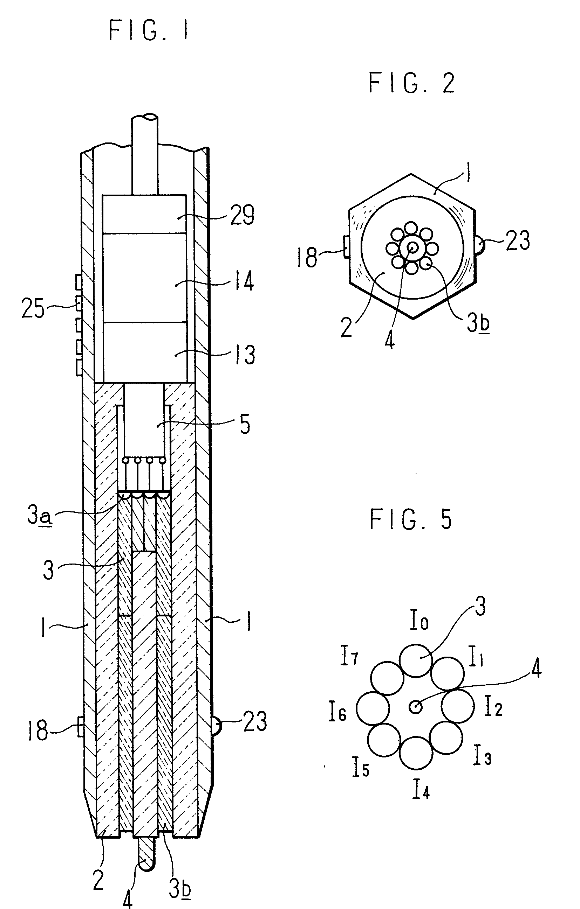

Figure 1 shows a section of a pencil-shaped input means for handwritten characters, figures or the like. Light-transmitting fibers 2 are arranged in annular form within the top of the tube 1, and eight light-receiving fibers 3 are arranged within the transmitting fibers 2 around a pen 4 such as a ball-point pen located on the center axis of the tube 1. The annular top end of the transmitting fiber 2 is arranged towered to the tip of the pen 4, while the base thereof is collected into one bundle and provided with a light emitting diode 2a as the light source. Each of the eight receiving fibers 3 has a light-receiving element 3a at the base and a lens 3b of distributed index of refraction at the top end so that the image of handwritten character is focused on the surface of the light-receiving element. Numeral 5 designates a handwriting reading circuit which reads the handwriting fed through the receiving fiber 3 at the receiving element 3a and is installed in the center of the tube 1. The handwriting reading circuit 5 comprises a light-receiving circuit 6 being connected to the element 3a, an AC amplifier 7, a gate 8, a detector 9 and a switching circuit 10. Since each of the eight receiving elements 3a had the handwriting reading circuit 5, eight output signals ($O_0 \sim O_7$) as a whole are obtained from the eight handwriting reading circuits 5. Numeral 11 designates an oscillator which is connected through a current amplifier 12 to the light emitting diode 2a for modulating the emitted light and to the gate 8 of each reading circuit 5.so as to constitute a
photoelectric switching circuit for the modulated light (Figure
3).

Numeral 13 designates an interface circuit of a
microcomputer 14 installed within the center of the tube 1 and
is provided with a status signal generator 15 as shown in
Figure 4.  The status signals consist of a ready signal 16 for
handwriting input, a stroke signal 17 showing connection portion
of characters, and a character step signal 19 generated by
operating a character step switch 18.  And the ready signal 16,
which is generated by passing logical sum of the eight output
signals of the handwriting reading circuits 5 through an OR
circuit 20 and a NOT circuit 21, is inputted to an I/O port 22
of the microcomputer 14.  The stroke signal 17 comprises logical
sum from the OR circuit 20 and is inputted to the I/O port 22.
Numeral 23 designates a ready lamp being lit at the generation
of the ready signal and installed to the outside of the tube.
Numeral 25 designates a plurality of operation key switches
installed to the outside of the tube 1 and the switches have a
function of inputting a condition signal 24 to the microcomputer 14 corresponding to sorts of written characters such as
Chinese characters, Japanese cursive or square "kana" characters.  Output signals from the eight reading circuit 5 are
inputted as handwriting direction data 30 also to the I/O port
22 of the microcomputer 14.  Numeral 26 shows a central processor of the microcomputer 14, numeral 27 a memory, and numeral
28 a clock generator.

A power source 29 of the microcomputer 14 is
installed within the tube 1.  A power supply cable and a signal cable 50 for transmitting the direction data and character recognition data are drawn out of the bottom of the input means. A direction display lamp being lit by the direction signal from the reading circuit 5 for indicating the handwriting stroke direction and a monitor display for the character recognition data as a result of the processing in the microcomputer 14 may be mounted outside the tube 1.

Operation of the input means for handwritten characters, figures or the like will be explained. Sorts of characters to be written are inputted to the microcomputer 14 by the condition key switch 25. The input means is held by hand at the correct vertical position and characters are written on a blanc paper by attaching the pen 4 thereto. Then the modulated light is irradiated from the light-transmitting fibers 2 towards the tip of the pen 4 and reflected at the paper surface. The reflected light is received by the eight light-receiving fibers 3 and converted into an AC electric signal by the light-receiving element 3a and the light-receiving circuit 6. The electric signal passes through the gate 8 and the detector 9 and is detected as the switching output. Thereby signals corresponding to handwritten characters at the eight receiving fibers 3 are outputted from respective reading circuits 5 in a time-serial fashion.

For example, referring to Figure 5, assume that the eight receiving fibers 3 bear the direction label numbers $I_0$ through $I_7$; when square Japanese "kana" character "イ", for example, is written by hand, the microcomputer receives data showing that the handwriting input in the light-receiving element is directed to the direction $I_1$ at the first stroke and the

direction from $I_7$ to $I_0$ at the second stroke.  In the micro-
computer 14, the input signals such as status signals, direction data or condition signal data which are generated by
writing the character in a time-serial fashion are processed
according to the previously programmed character recognition
algorithm, thereby the character "$\Lambda$" is identified as being
within the treatment range.

When alphabetical character "A" is written by hand,
the condition signal "alphabet" is inputted by the condition
key switch 25.  As the character "A" is written, the status
signals and stroke direction data are inputted to the micro-
computer 14 as follows.  The data showing that the handwriting
input is directed to the direction $I_1$ at the first stroke, the
direction from $I_5$ through $I_6$ to $I_7$ at the second stroke, and
the direction from $I_5 - I_1$ through $I_c$, $I_7 - I_6$, $I_6$, and $I_7 -$
$I_6$ to $I_6 - I_5$ at the third stroke is inputed into the micro-
computer.  In the microcomputer 14, the input signals such as
direction data are processed according to the previously programmed character recognition algorithm in similar manner to the
above mentioned, thereby the character "A" is identified as
being within the treatment range.  The character step switch 18
turns on every time when one character is written, thereby the
character step signal 19 is inputted to the I/O port 22 of the
microcomputer 14 so as to recognize the end of reading one
character.

Recognition algorithm in logical structure of the
character recognition comprises the step stracture as follows.
Which level is to be adopted is determined according to the
factors such as the character configuration.

level 1 ... stroke number

level 2 ... direction label number

level 3 ... direction label number at the initial and end points

level 4 ... direction difference (bending within the stroke)

level 5 ... stroke configuration (macroscopic recognition)

level 6 ... direction label number at the end of the first stroke and the beginning of the second stroke

level 7 ... connection between strokes, existence of cross and form thereof, existence of loop

level 8 ... variation pattern of direction label number

Although in the above mentioned embodiment characters are written on a blanc paper and then inputted, they may be written on a special section paper with the scale of ruled lines thereby the characters may be inputted together with inspection of X-coordinate and Y-coordinate values. In this case, since the coordinate of the handwriting can be inspected on the paper surface, eight series of the light-receiving fibers, light-receiving elements and handwriting reading circuits in the above mentioned embodiment may be reduced into one series. Thereby the device is simplified and the study result of the recognition manner of freely handwritten characters in conventional tablet system may be utilized without changing.

Figures 6 and 7 show another embodiment and Figure 6 shows an input means for handwritten characters, figures or the like which is mounted to the side portion of a pen 31. Within a body 32 of the input means, optical fiber 33 comprising a bundle of a plurality of fiber elements is installed and the top end of the optical fiber 33 is positioned near the tip of the pen 31, and a light-transmitting surface 34 of the top end of the optical fiber is opposite to the tip of the pen and the handwriting thereof. Numeral 35 designates a light source disposed near the transmitting surface 34 of the optical fiber 33 and the light source illuminates the characters or figures written by the pen 31 so as to make the optical inspection of the image easy. Numeral 36 designates a condition switch attached to a portion of the body 32 and the condition switch consists of a plurality of switches for feeding the information regarding sorts of the characters or figures which are written or to be written by the pen 31, such as Chinese characters, cursive or square Japanese "kana" characters, to a data processor such as a computer as described later. The body 32 of the input means in the above mentioned constitution is mounted to the side of the pen 31 by a connecting member 37.

On the other hand, the end of the optical fiber 33 introduced from the body 32 of the input means is connected to an image sensor 38 comprising photoelectric elements arranged on a plane. Accordingly as shown in Figure 7, the image sensor 38 is arranged opposite to the end surface of the optical fiber 33 so that the handwriting pattern information transmitted through the optical fiber 33 can be detected by the sensor. Numeral 39 designates a control circuit generating electric signals of the X and Y coordinates from the optical information on the two-dimensional image sensor 38 by scanning in the X and Y directions. Numeral 40 designates a data processor processing the electric signals fed from the control circuit 39, and numeral 41 designates a memory 41 storing the data from the processor 40. The processor 40 and memory 41 used here are contained in the computer.

In the following, operation of the input means for characters, figures or the like in Figures 6 and 7 will be explained. When a character, for instance, is written by using the pen 31 accompanied by the input means for characters, figures or the like with optical fibers, the handwriting is illuminated by the light source 35 and is optically detected as a contrast, i,e. light and shade by fiber elements of the optical fiber 33. The light enters the transmitting surface 34 and is transmitted through the optical fiber 33, thereby the image of the handwriting received on the transmitting surface 34 is displayed without variation on the surface of the two-dimensional image sensor 38 arranged at the end of the optical fiber 33. In the image sensor 38, the high-speed scanning is effected in the X and Y directions by the control circuit 39, thereby each output of the optoelectric elements of the image sensor 38 is displayed as the X and Y coordinate values. The scanning is continuously effected at a regular interval, and the pattern information in each scanning step is stored through the data processor 40 in the memory 41 in sequence. The setting signal of the condition switch 36 is also fed to the processor 40, thereby the information is stored which indicates that a Chinese character, for instance, is written by the pen.

In addition, although the optical fiber in the above

0035036

mentioned embodiment is attached to the side portion of the pen, it may be arranged around the pen. In place of the image sensor, a photograph film may be disposed to the end of the optical fiber so as to record the handwriting.

(12)                              0035036

CLAIMS

1. An input means for handwritten characters, figures or the like, characterized by having:

transmitting and receiving fibers which are arranged towards the tip of a pen;

a handwriting reading circuit which inputs optical signals from said receiving fiber using light-receiving elements and outputs electric signals indicating the handwriting direction;

a status signal generator which generates status signals; and

a microcomputer which inputs the direction data from said handwriting reading circuit and the status signals from the status signal generator, and generates the character recognition data by the operation processing according to the programmed character recognition algorithm.

2. An input means for handwritten characters, figures or the like according to claim 1, characterized in that said status signal generator is a circuit which generates the status signals comprising ready signals of the handwriting input, stroke signals indicating the connecting portion of characters, and character step signals generated by the operation of a character step switch.

3. An input means for handwritten characters, figures or the like according to claim 1 or 2, characterized by further having a condition key switch for generating condition signals which indicate the sorts of characters inputted to the computer.

0035036

4. An input means for handwritten characters, figures or the like according to claim 1 or 2, characterized by further having a monitor display for indicating the character data as a result of the operation processing.

5. An input means for handwritten characters, figures or the like according to claim 3, characterized by further having a monitor display for indicating the character data as a result of the operation processing.

6. An input means for handwritten characters, figures or the like, characterized by having:

optical fibers which are attached to the side of a pen in the direction towards the tip thereof;

an image sensor which is connected to the end of said optical fiber and detects the optical information transmitted from the optical fiber;

a control circuit which generates electric signals by the scanning of said image sensor in both X and Y directions;

a data processor which processes the signals from said control circuit and generates the character pattern information; and

a memory which stores the character pattern information in sequence.

FIG. 1

FIG. 2

FIG. 5

FIG. 3

FIG. 4

FIG. 6

FIG. 7

# INTERNATIONAL SEARCH REPORT

International Application No PCT/JP79/00328

0035036

## I. CLASSIFICATION OF SUBJECT MATTER (if several classification symbols apply, indicate all) 3

According to International Patent Classification (IPC) or to both National Classification and IPC

G06K 9/20

## II. FIELDS SEARCHED

### Minimum Documentation Searched 4

| Classification System | Classification Symbols |
|---|---|
| I P C | G06K 9/20 ∿ 9/26, 11/00 ∿ 11/06 |

### Documentation Searched other than Minimum Documentation to the Extent that such Documents are Included in the Fields Searched 6

Jitsuyo Shinan Koho    1967 ∿ 1979

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, Y1, 50-27867   1975-8-18 | 1, 6 |
| X | JP, A, 51-109736   1976-9-28<br>Upper right column, line 6 and drawing | 1 |
| X | JP, A, 51-110926   1976-9-30 | 1, 2 |
| P | JP, A, 54-91149   1979-7-19 | 3 |
| X | JP, A, 51-109736   1976-9-28<br>Upper right column, line 3 and drawing | 4, 5 |

* Special categories of cited documents: 15

"A" document defining the general state of the art
"E" earlier document but published on or after the international filing date
"L" document cited for special reason other than those referred to in the other categories
"O" document referring to an oral disclosure, use, exhibition or other means

"P" document published prior to the international filing date but on or after the priority date claimed
"T" later document published on or after the international filing date or priority date and not in conflict with the application, but cited to understand the principle or theory underlying the invention
"X" document of particular relevance

## IV. CERTIFICATION

| Date of the Actual Completion of the International Search 2 | Date of Mailing of this International Search Report 2 |
|---|---|
| January 22, 1980 (22.01.80) | February 12, 1980 (12.02.80) |
| International Searching Authority 1 | Signature of Authorized Officer 20 |
| Japanese Patent Office | |